# FASCICULE DE BREVET EUROPEEN

(11) **EP 0 870 105 B1**
(45) Date de publication et mention de la délivrance du brevet: **27.11.2002**
(21) Numéro de dépôt: 96944093.2
(22) Date de dépôt: 27.12.1996
(51) Int. Cl.: F02K 9/97

(54) **TUYERE DIVERGENT DEPLOYABLE DE PROPULSEUR**
AUSFAHRBARE RAKETENTRIEBWERKDÜSE
EXTENDABLE DIVERGENT TAIL PIPE FOR PROPULSION UNIT

(30) Priorité: 28.12.1995 FR 9515634
(43) Date de publication de la demande: 14.10.1998
(73) Titulaire: Société Nationale d'Etude et de Construction de Moteurs d' Aviation, 75015 Paris (FR)
(72) Inventeur: PERRIER, Bruno, F-33110 Le Bouscat (FR); SANS, Jean-Luc, F-33600 Pessac (FR); HENAULT, Alain, F-33160 Saint-Aubin-de-Médoc (FR)
(74) Mandataire: Joly, Jean-Jacques
(86) Numéro de dépôt international: FR9602093
(87) Numéro de publication internationale: WO97024521

(56) Documents cités:
- FR-A- 2 398 889
- FR-A- 2 622 931
- GB-A- 2 029 511
- US-A- 3 526 365
- US-A- 3 561 679
- US-A- 5 282 576

## Description

La présente invention a pour objet un divergent déployable de propulseur.

La poussée d'un propulseur dépend du débit de gaz éjecté et de la vitesse d'éjection. Pour optimiser ce dernier paramètre, il est nécessaire d'avoir un divergent de fort diamètre de sortie, principalement dans le cas d'un deuxième ou d'un troisième étage d'un propulseur multi-étages. Cela conduit à des divergents longs, souvent peu compatibles avec l'encombrement disponible. Une solution consiste à concevoir un divergent déployable ayant une longueur réduite dans sa configuration initiale et qui peut être allongé par mise en place d'un ou plusieurs anneaux de divergent.

Des divergents déployables sont également utilisés pour permettre une adaptation de la section de sortie de tuyères de propulseurs, en fonction de la pression ambiante, laquelle diminue entre des faibles altitudes proches du sol et les altitudes élevées, de sorte qu'une poussée optimale soit le plus possible approchée malgré les changements d'altitude.

Dans tous ces cas, le déploiement de la partie déployable du divergent doit pouvoir s'effectuer de façon automatique et fiable avec un minimum de dépense d'énergie.

Il a été proposé différents types de mécanismes de déploiement de divergents déployables, en particulier des mécanismes utilisant des systèmes à câbles, à vis à rouleaux, à vis à billes, à poutres déroulables ou à membrane. Dans l'ensemble, ces mécanismes sont relativement encombrants et apportent un accroissement de masse très pénalisant, notamment dans le cas de divergents de grands diamètres.

Un mécanisme de déploiement ne présentant pas ces inconvénients a déjà été proposé dans le brevet US 5 282 576 de la demanderesse. Le divergent comprend une première partie dont l'extrémité amont est raccordée au fond du propulseur et une deuxième partie sous forme d'un anneau mobile entre une position rétractée, dans laquelle il entoure la première partie de divergent, et une position déployée dans laquelle il se raccorde à l'extrémité aval de la première partie pour prolonger celle-ci. Le mécanisme de déploiement comprend des bras articulés dont une extrémité est reliée à l'anneau de divergent, et des moyens d'actionnement des bras permettant de déplacer l'anneau de divergent de sa position rétractée à sa position déployée.

Le document FR 2 622 931 décrit un mécanisme de déploiement à trois bras articulés dont les mouvements sont synchronisés pour guider précisément l'anneau de divergent.

Un blocage de l'anneau de divergent dans sa position déployée est nécessaire pour éviter son retour vers la position rétractée sous la poussée du jet qui le traverse. Dans le brevet US 5 282 576, ce blocage est réalisé par arc-boutement des bras afin de ne pas laisser le moyen d'actionnement activé en permanence après déploiement, le fonctionnement du mécanisme de déploiement étant réversible.

Dans le document FR 2 398 889 des moyens répartis à l'extrémité aval de la première partie fixe du divergent et à l'extrémité amont de l'anneau de divergent permettent le verrouillage de celui-ci en position déployée dans le prolongement de la première partie de divergent.

La présente invention a pour but de fournir un divergent déployable du type de celui du brevet US 5 282 576, mais dans lequel le verrouillage de l'anneau en position déployée est réalisé de façon fiable, sans nécessiter une géométrie particulière des bras, le mécanisme de déploiement n'étant pas destiné à être réversible.

Ce but est atteint du fait que :
- des moyens sont prévus de façon répartie à la périphérie de l'extrémité aval de la première partie de divergent et à la périphérie de l'extrémité amont de l'anneau de divergent afin de permettre un verrouillage de l'anneau de divergent sur l'extrémité aval de la première partie de divergent lorsque l'anneau de divergent est en position déployée, et
- le mécanisme de déploiement comprend au moins quatre bras formant avec l'anneau de divergent un ensemble hyperstatique, de sorte que l'anneau peut être déplacé sans être sensiblement déformé afin d'être amené dans la position voulue pour se verrouiller automatiquement et complètement sur la première partie de divergent, lorsqu'il est déployé.

Le divergent déployable selon l'invention est ainsi remarquable par la combinaison du verrouillage automatique de l'anneau de divergent sur la première partie de divergent, grâce à des moyens de verrouillage répartis à leur périphérie, et du caractère hyperstatique de l'ensemble mobile qui permet de guider l'anneau de divergent avec précision vers la position déployée exacte requise pour que se réalise le verrouillage automatique.

Avantageusement, les moyens de verrouillage comprennent une pluralité de languettes flexibles coopérant avec un ou plusieurs logements correspondants de manière à venir s'encliqueter dans le ou les logements lorsque l'anneau de divergent parvient en position déployée.

Avantageusement encore, des moyens de blocage déverouillables sont prévus pour bloquer l'anneau de divergent en position rétractée.

L'invention sera mieux comprise à la lecture de la description faite ci-après, à titre indicatif mais non limitatif, en référence aux dessins annexés sur lesquels :
- la figure 1 est une demi-vue schématique en coupe montrant un divergent déployable selon un premier mode de réalisation de l'invention, avec l'anneau de divergent en position rétractée,
- la figure 2 est une demi-vue en coupe similaire à la figure 1, mais avec l'anneau de divergent en position déployée ;
- la figure 3 est une vue de dessus d'un bras du mécanisme de déploiement des figures 1 et 2 ;
- la figure 4 est une vue de détail montrant les moyens de verrouillage de l'anneau de divergent sur la première partie de divergent dans le divergent déployable des figures 1 et 2, immédiatement avant verrouillage ;
- la figure 5 est une vue de détail similaire à la figure 4, mais après verrouillage ;
- la figure 6 est une demi-vue schématique en coupe montrant un divergent déployable selon un deuxième mode de réalisation de l'invention, avec l'anneau de divergent en position rétractée ; et
- la figure 7 est une demi-vue en coupe similaire à la figure 1, mais avec l'anneau de divergent en position déployée.

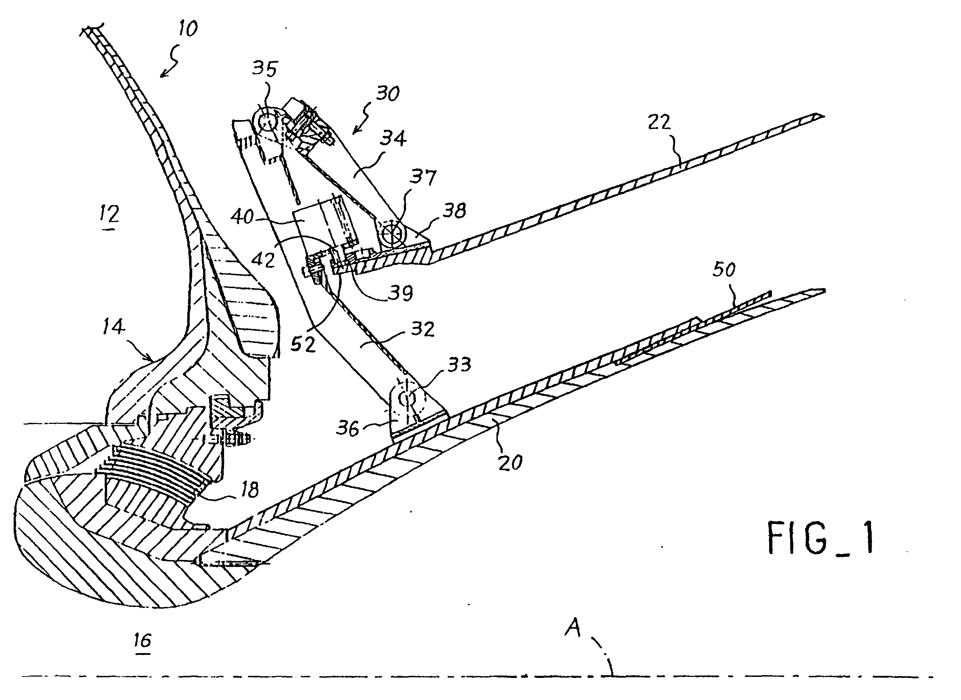

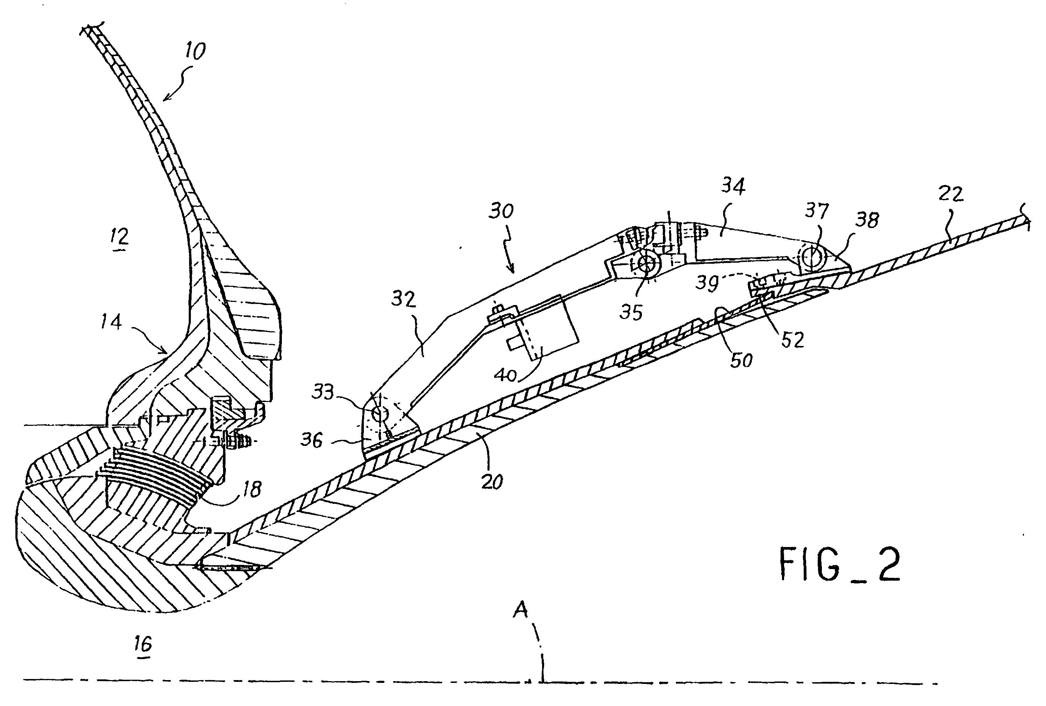

Sur les figures 1 et 2, la référence 10 désigne un corps de propulseur, par exemple un propulseur à propergol solide, dont la chambre de combustion 12 s'ouvre, à travers le fond 14 du propulseur, par un col de tuyère 16 prolongé par une partie première 20 d'un divergent déployable.

L'extrémité amont de la partie de divergent 20, dans le sens d'écoulement du flux gazeux, et le col de tuyère 16 sont raccordés au fond 14 du propulseur par l'intermédiaire d'un cône, dans le cas d'une tuyère fixe ou, dans le cas illustré d'une tuyère articulée, par l'intermédiaire d'une butée flexible 18. Celle-ci est par exemple une butée d'articulation sphérique formée, de façon connue en soi, de couches alternées de métal ou matériau composite et d'élastomère adhérisées.

Le corps et le fond du propulseur, ainsi que le col de tuyère et la partie 20 de divergent sont normalement revêtus intérieurement d'un matériau ablatif de protection thermique.

Le divergent déployable comprend en outre un anneau de divergent 22 qui, en position rétractée (figure 1), entoure la partie de divergent 20 en étant coaxial avec celle-ci et, en position déployée (figure 2), se raccorde à l'extrémité aval de la partie de divergent 20 et prolonge celle-ci de manière à former un divergent ayant un diamètre de sortie agrandi.

Le maintien de l'anneau de divergent 22 en position rétractée et son guidage vers la position déployée sont assurés au moyen de quatre bras articulés 30 répartis régulièrement autour de la première partie de divergent 20.

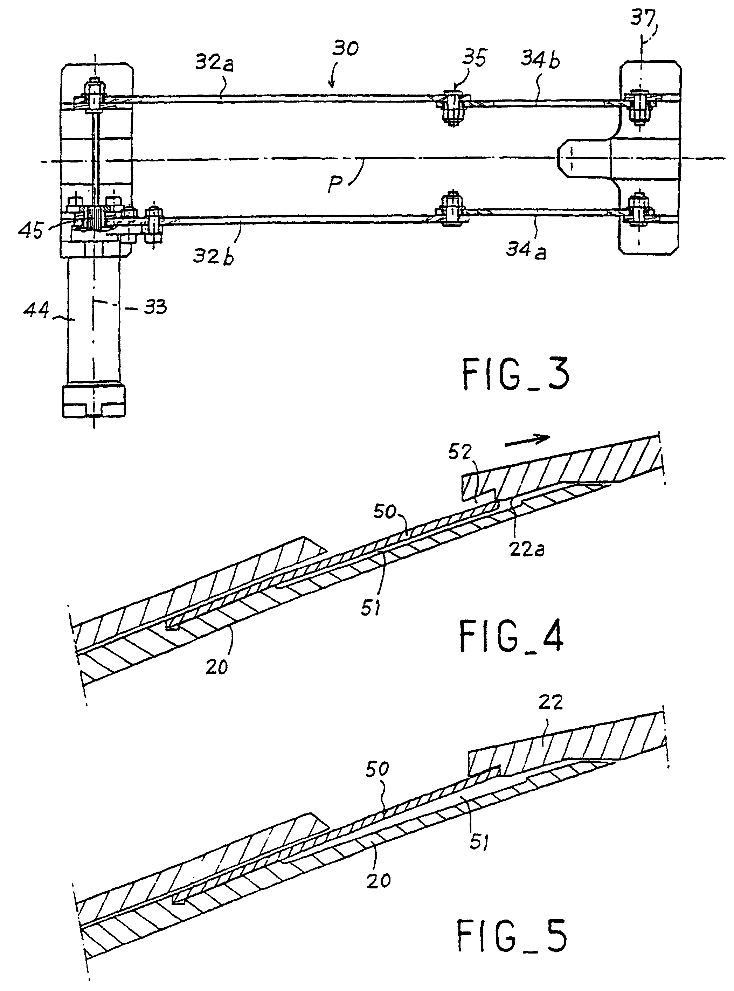

Chaque bras (figures 1, 2, 3) comporte un premier segment 32 articulé à une première extrémité sur une platine 36 fixée sur la paroi extérieure de la première partie de divergent 20 (axe 33) et, à une deuxième extrémité, sur une première extrémité d'un deuxième segment 34 (axe 35). A sa deuxième extrémité, le segment 34 est articulé sur une platine 38 fixée sur la paroi extérieure de l'anneau de divergent (axe 37). Chaque segment de bras 32, 34 est formé de deux flancs, respectivement 32a, 32b et 34a, 34b parallèles entre eux. Le plan de symétrie P (figure 3) de chaque bras contient l'axe A du divergent, les axes d'articulation 33, 35 et 37 aux extrémités des segments 32 et 34 étant perpendiculaires au plan P et à l'axe A. Comme le montre la figure 1, un dispositif de blocage du bras en position rétractée comprend une butée 40 solidaire du segment 32 et munie d'un ergot 42 qui pénètre dans un logement 39 de la platine 38. Le dégagement de l'ergot 42 hors du logement 39 afin de libérer le bras 30 peut être réalisé par des moyens pneumatiques, par exemple en reliant l'ergot au piston d'un vérin pneumatique, ou par des moyens pyrotechniques. Il n'est pas nécessaire de prévoir un dispositif de blocage sur chaque bras 30, le blocage d'un bras pouvant suffire à maintenir l'ensemble en position rétractée.

Lorsque le bras 30 est libéré, il peut se déployer avec rotation des segments 32, 34 autour de leurs axes d'articulation d'extrémité. Pendant le déploiement du bras, la position du plan de symétrie P reste inchangée.

Dans l'exemple des figures 1 à 3, le déploiement du bras 30 est réalisé au moyen d'un ressort de torsion 44 monté sur l'axe d'articulation 33. Le ressort 44 entraîne un arbre de sortie cannelé 45 en prise avec le segment 32.

Pour réaliser le déploiement de l'anneau de divergent 22, les quatre bras 30 sont libérés simultanément par déblocage des ergots 42. Les ressorts 44 ainsi libérés provoquent la rotation simultanée des segments de bras 32 et, par là même le déploiement simultané des bras.

On notera que l'ensemble formé par les quatre bras 30 et l'anneau de divergent 22 est hyperstatique, ce qui fait que l'anneau 22 se déplace sans se déformer et en restant constamment centré sur l'axe A. Le caractère hyperstatique du montage permet donc d'assurer un guidage précis de l'anneau de divergent 22 vers la position déployée, une absence de synchronisme des mouvements des bras étant empêchée. On notera que ce résultat peut toujours être obtenu en montant un ressort de torsion sur seulement certains des bras, voire même un seul. Le caractère hyperstatique vient ici du fait que quatre bras 30 sont prévus. Le nombre de bras pourrait être supérieur à quatre, mais avec pour conséquence un alourdissement du mécanisme n'apportant pas réellement d'avantage supplémentaire.

Selon une particularité du divergent déployable conforme à l'invention, des moyens sont prévus, à la périphérie de l'extrémité aval de la partie de divergent 20 et à la périphérie de l'extrémité amont de l'anneau de divergent 22 pour assurer leur verrouillage mutuel lorsque l'anneau de divergent parvient en position déployée.

Dans l'exemple illustré (figures 1, 2, 4 et 5) ces moyens de verrouillage sont constitués par une pluralité de languettes flexibles 50 qui sont fixées à la périphérie de l'extrémité aval de la partie de divergent 20, du côté extérieur, et par un décrochement annulaire 52 formé à l'extrémité amont de l'anneau de divergent 22, du côté intérieur.

Lorsque l'anneau de divergent 22 parvient à proximité de sa position complètement déployée, la paroi interne 22a de l'anneau 22 prend appui sur les languettes 50, faisant fléchir celles-ci vers l'axe du divergent (figure 4). A cet effet, les languettes 50 ménagent, dans leur partie d'extrémité libre, un espace 51 avec la paroi extérieure de la partie de divergent 20.

La position des languettes 50 est déterminée, de même que celle du décrochement 52, pour que les languettes s'encliquettent dans le décrochement 52 dès que l'anneau de divergent 22 parvient en position déployée (figure 5). Le verrouillage de l'anneau de divergent 22 sur la partie de divergent 20 est ainsi assuré. On notera que la précision apportée par le montage hyperstatique autorise ce mode de verrouillage automatique. On notera aussi que le décrochement 52 pourra être remplacé par une pluralité de logements correspondant aux languettes.

Dans le mode de réalisation des figures 1 à 3, le déploiement des bras est assuré par un ou plusieurs ressorts de torsion. Cette solution convient lorsque le divergent est déployé avant allumage du propulseur, mais la force développée par le ou les ressorts serait normalement insuffisante pour s'opposer à la pression du jet de gaz si le déploiement était commandé après allumage.

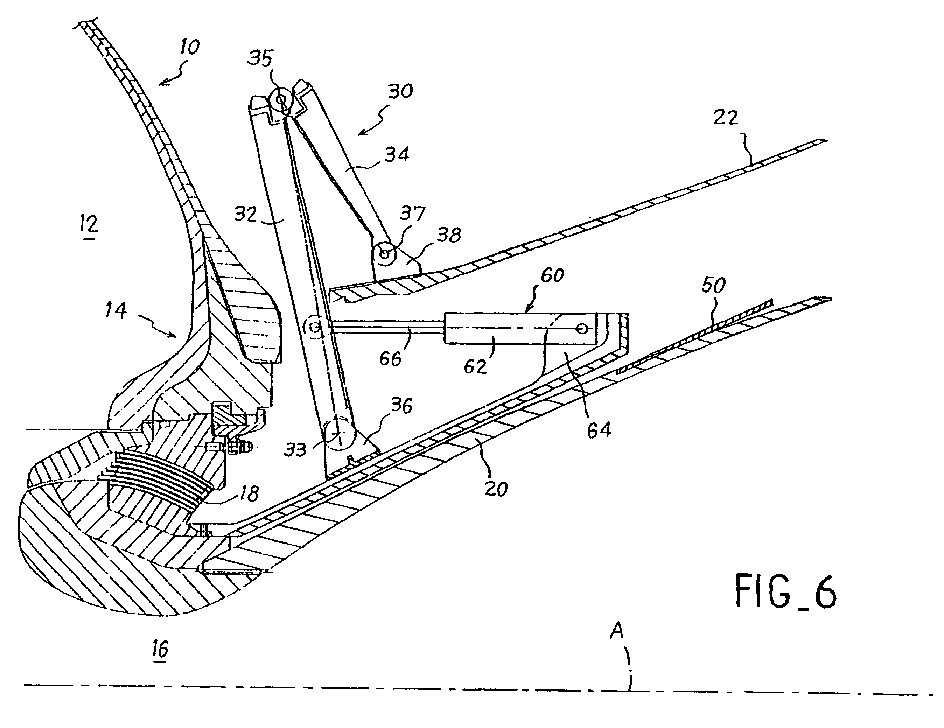

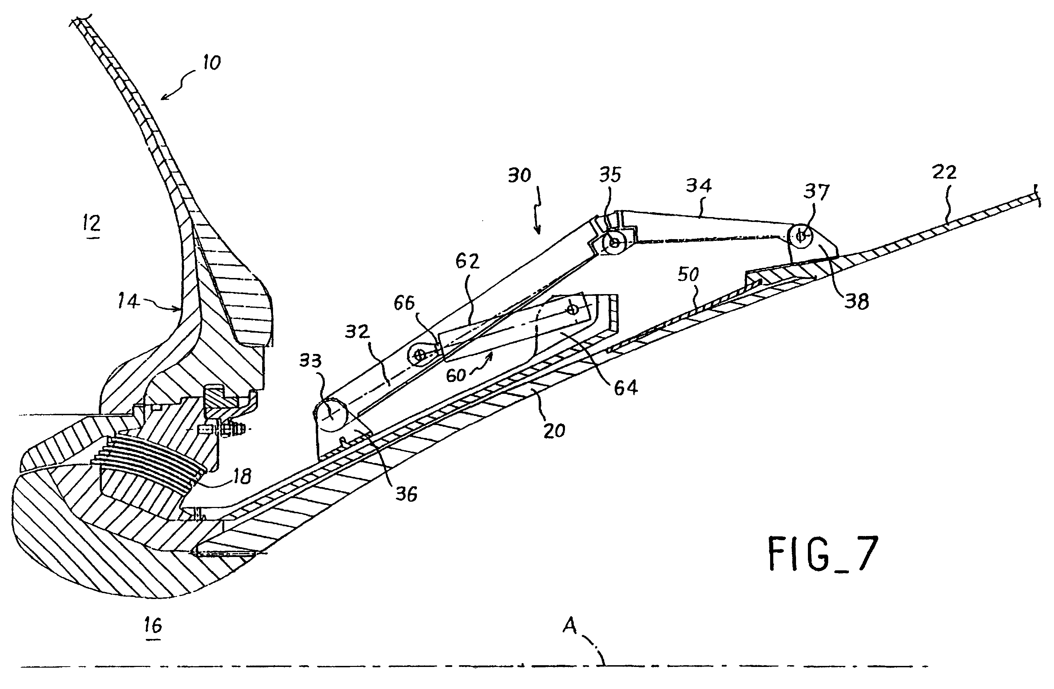

Un mode de réalisation convenant dans le cas d'un déploiement après allumage du propulseur est illustré par les figures 6 et 7.

Dans ce deuxième mode de réalisation, les parties du divergent déployable correspondant à des parties du mode de réalisation des figures 1 à 5 portent les mêmes références et ne seront pas à nouveau décrites.

Comme le montrent les figures 6 et 7, le maintien du bras 30 à l'état rétracté et son déploiement sont assurés par au moins un vérin 60 dont le cylindre 62 est articulé sur une platine 64 fixée sur la paroi externe de la partie de divergent 20 et dont la tige 66 est articulée à son extrémité sur le segment 32 du bras 30. Il n'est pas nécessaire de prévoir de dispositif de blocage du bras 30 en position rétractée.

Le vérin 60 peut être de type pneumatique ou hydraulique. Il est possible de prévoir un seul vérin, le déplacement simultané des autres bras étant assuré par le montage hyperstatique, ou de munir plusieurs bras d'un vérin. Le verrouillage de l'anneau de divergent 22 sur la partie de divergent 20 est assuré comme décrit en référence aux figures 4 et 5.

D'autres moyens peuvent être prévus pour assurer la motorisation des moyens de déploiement lorsque le déploiement doit être effectué après allumage. Il est possible par exemple de remplacer les ressorts de torsion du mode de réalisation des figures 1 à 3 par un moteur ou plusieurs moteurs. En outre, bien entendu, une motorisation par vérin ou moteur peut être prévue même dans le cas où le déploiement est réalisé avant allumage. Il est encore envisageable de réaliser le déploiement par des moyens pyrotechniques.

On notera enfin que le mode de verrouillage par languettes et décrochement illustré par les figures 4 et 5 pourra aisément être remplacé par tout autre moyen connu permettant de réaliser un verrouillage ou un encliquetage de façon automatique.

## Revendications

1. Divergent déployable de propulseur, comprenant :
- une première partie de divergent (20) ayant une extrémité amont raccordée au fond (14) du propulseur,
- une deuxième partie de divergent (22) sous forme d'un anneau mobile entre une position rétractée dans laquelle il entoure la première partie de divergent (20) et une position déployée dans laquelle il se raccorde à l'extrémité aval de la première partie pour prolonger celle-ci, et
- un mécanisme de déploiement comportant plusieurs bras articulés (30) dont une extrémité est reliée à l'anneau de divergent, l'un des bras au moins étant muni de moyens (44 ; 60) d'actionnement permettant de déplacer l'anneau de divergent de sa position rétractée à sa position déployée,
**caractérisé en ce que** :
- des moyens (50, 52) sont prévus de façon répartie à la périphérie de l'extrémié aval de la première partie de divergent et à la périphérie de l'extrémité amont de l'anneau de divergent afin de permettre un verrouillage de l'anneau de divergent (22) sur l'extrémité aval de la première partie de divergent (20) lorsque l'anneau de divergent est en position déployée, et
- le mécanisme de déploiement comprend au moins quatre bras (30) formant avec l'anneau de divergent (22) un ensemble hyperstatique, de sorte que l'anneau peut être déplacé sans être sensiblement déformé afin d'être amené dans la position voulue pour se verrouiller automatiquement et complètement sur la première partie de divergent (20), lorsqu'il est déployé.

2. Divergent selon la revendication 1, **caractérisé en ce que** les moyens de verrouillage comprennent une pluralité de languettes flexibles (50) coopérant avec un ou plusieurs logements correspondants (52) de manière à venir s'encliqueter dans le ou les logements (52) lorsque l'anneau de divergent (22) parvient en position déployée.

3. Divergent selon l'une quelconque des revendications 1 et 2, **caractérisé en ce que** des moyens de blocage déverrouillables sont prévus pour bloquer l'anneau de divergent (22) en position rétractée.

4. Divergent selon la revendication 3, dans lequel chaque bras (30) comprend plusieurs segments articulés (32, 34), **caractérisé en ce que** les moyens de blocage (42, 39) sont agencés de manière à immobiliser un segment d'au moins un bras par rapport à un autre segment du même bras.

5. Divergent selon l'une quelconque des revendications 1 à 4, **caractérisé en ce que** le déplacement des bras (30) en position déployée est réalisé par des moyens moteurs montés sur une articulation d'au moins un bras.

6. Divergent selon la revendication 5, **caractérisé en ce que** les moyens moteurs sont constitués par un ressort de torsion.

7. Divergent selon l'une quelconque des revendications 1 à 4, **caractérisé en ce que** le déplacement du bras (30) en position déployée est réalisé par des moyens moteurs agissant sur un segment d'au moins un bras (30).

8. Divergent selon la revendication 7, **caractérisé en ce que** le déplacement des bras (30) en position déployée est réalisé au moyen d'au moins un vérin (60) monté entre la première partie de divergent (20) et un segment de bras articulé (30).

## Patentansprüche

1. Ausschwenkbares Triebwerk-Auslaufteil, umfassend:
- einen ersten Auslaufteil-Abschnitt (20), der mit einem stromaufwärtigen Ende am Boden (14) des Triebwerks angebunden ist;
- einen zweiten Auslaufteil-Abschnitt (22) in Form eines Rings, der beweglich ist zwischen einer zurückgezogenen Stellung, in der er den ersten Auslaufteil-Abschnitt (20) umgibt, und einer ausgeschwenkten Stellung, in der er an das stromabwärtige Ende des ersten Abschnitts anschließt, um diesen zu verlängern, und
- einen Ausschwenkmechanismus mit mehreren Gelenkarmen (30), von denen ein Ende an den Ring des Auslaufteils angeschlossen ist, und von denen mindestens ein Arm mit einer Betätigungseinrichtung (44; 60) ausgestattet ist, die eine Verstellung des Auslaufteil-Rings aus dessen zurückgezogener in dessen ausgeschwenkte Stellung ermöglicht,
**dadurch gekennzeichnet, dass**
- eine Einrichtung (50, 52) in verteilter Weise am Umfang des stromabwärtigen Endes des ersten Auslaufteil-Abschnitts und an dem Umfang des stromaufwärtigen Endes des Auslaufteil-Rings vorgesehen ist, um den Auslaufteil-Ring (22) an dem stromabwärtigen Ende des ersten Auslaufteil-Abschnitts (20) zu verriegeln, wenn sich der Auslaufteil-Ring in der ausgeschwenkten Stellung befindet, und
- der Ausschwenkmechanismus mindestens vier Arme (30) aufweist, die zusammen mit dem Auslaufteil-Ring (22) eine statisch unbestimmte Anordnung bilden, derart, dass der Ring sich ohne wesentliche Verformung derart verlagern lässt, dass er in die gewünschte Stellung gelangt, um sich automatisch und vollständig an dem ersten Auslaufteil-Abschnitt (20) zu verriegeln, wenn er ausgeschwenkt ist.

2. Auslaufteil nach Anspruch 1, **dadurch gekennzeichnet, dass** die Verriegelungseinrichtung mehrere flexible Zungen (50) aufweist, die mit einem oder mehreren entsprechenden Ausnehmungen (20) derart zusammenwirken, dass sie in die Ausnehmung bzw. Ausnehmungen (52) einrasten, wenn der Auslaufteil-Ring (22) in die ausgeschwenkte Stellung gelangt.

3. Auslaufteil nach einem der Ansprüche 1 und 2, **dadurch gekennzeichnet, dass** eine lösbare Sperreinrichtung vorgesehen ist, um den Auslaufteil-Ring (22) in der zurückgezogenen Stellung zu sperren.

4. Auslaufteil nach Anspruch 3, bei dem jeder Arm (30) mehrere gelenkige Segmente (32, 34) aufweist, **dadurch gekennzeichnet, dass** die Sperreinrichtung (42, 39) dazu ausgebildet ist, mindestens ein Segment eines Arms in Bezug auf ein anderes Segment desselben Arms zu fixieren.

5. Auslaufteil nach einem der Ansprüche 1 bis 4, **dadurch gekennzeichnet, dass** die Verlagerung der Arme (30) in die ausgeschwenkte Stellung mit Hilfe von Antrieben erfolgt, die an einem Gelenk mindestens eines Arms angebracht sind.

6. Auslaufteil nach Anspruch 5, **dadurch gekennzeichnet, dass** die Antriebe durch eine Torsionsfeder gebildet werden.

7. Auslaufteil nach einem der Ansprüche 1 bis 4, **dadurch gekennzeichnet, dass** die Verlagerung der Arme (30) in die ausgeschwenkte Stellung mit Hilfe von Antrieben erfolgt, die auf ein Segment von mindestens einem Arm (30) einwirken.

8. Auslaufteil nach Anspruch 7, **dadurch gekennzeichnet, dass** die Verlagerung der Arme (30) in die ausgefahrene Stellung mit Hilfe mindestens einer Schraubenspindel (60) erfolgt, die zwischen den ersten Auslaufteil-Abschnitt (20) und ein Segment des Gelenkarms (30) gekoppelt ist.

## Claims

1. A deployable diverging part for a thruster, the diverging part comprising:
- a first portion of the diverging part (20) having an upstream end connected to the end wall (14) of the thruster;
- a second portion of the diverging part (22) in the form of a ring that is movable between a retracted position in which it surrounds the first diverging part (20) and a deployed position in which it is connected to the downstream end of the first portion so as to extend it; and
- a deployment mechanism comprising a plurality of hinged arms (30) each having one end connected to the ring of the diverging part, with at least one arm being provided with actuator means (44; 60) enabling the ring of the diverging part to be moved from its retracted position to its deployed position;
the diverging part being **characterised in that**:
- means (50, 52) are provided in distributed manner at the periphery of the downstream end of the first portion of the diverging part and at the periphery of the upstream end of the ring of the diverging part so as to enable the ring (22) of the diverging part to be locked onto the downstream end of the first portion of the diverging part (20) when the ring of the diverging part is in its deployed position; and
- the deployment mechanism comprises at least four arms (30) co-operating with the ring (22) of the diverging part to form a hyperstatic assembly so that the ring can be moved without significant deformation so as to be brought to the desired position for locking automatically and completely to the first portion of the diverging part (20) when it is deployed.

2. A diverging part according to claim 1, **characterised in that** the locking means comprise a plurality of flexible tongues (50) co-operating with one or more corresponding recesses (52) so as to snap into the recess(es) (52) when the ring (22) of the diverging part reaches its deployed position.

3. A diverging part according to claim 1 or 2, **characterised in that** releasable locking means are provided to lock the ring (22) of the diverging part in its retracted position.

4. A diverging part according to claim 3, in which each arm (30) comprises a plurality of hinged segments (32, 34), **characterised in that** the locking means (42, 39) are organised to prevent a segment of at least one of the arms from moving relative to another segment of the same arm.

5. A diverging part according to any one of claims 1 to 4, **characterised in that** the arms (30) are moved into the deployed position by drive means mounted on a hinge of at least one arm.

6. A diverging part according to claim 5, **characterised in that** the drive means are constituted by a torsion spring.

7. A diverging part according to any one of claims 1 to 4, **characterised in that** the arms (30) are moved into the deployed position by drive means acting on a segment of at least one arm (30).

8. A diverging part according to claim 7, **characterised in that** the arms (30) are moved into the deployed position by means of at least one actuator (60) mounted between the first portion of the diverging part (20) and a segment of a hinged arm (30).
